# FASCICULE DE BREVET EUROPEEN

(11) **EP 3 883 803 B1**
(45) Date de publication et mention de la délivrance du brevet: **07.12.2022**
(21) Numéro de dépôt: 19806025.3
(22) Date de dépôt: 16.10.2019
(51) Int. Cl.: B60K 15/01, B60K 15/03, B60K 15/035

(54) **RÉSERVOIR À CARBURANT MODULAIRE POUR VÉHICULE AUTOMOBILE**
MODULARER KRAFTSTOFFTANK FÜR KRAFTFAHRZEUG
MODULAR FUEL TANK FOR MOTOR VEHICLE

(30) Priorité: 23.11.2018 FR 1871762
(43) Date de publication de la demande: 29.09.2021
(73) Titulaire: PSA Automobiles SA, 78300 Poissy (FR)
(72) Inventeur: CONVERS, Germain, 70290 Champagney (FR); DERUELLE, Romain, 25420 Berche (FR); JOLIVET, Frédéric, 68720 Eglingen (FR); SAILLARD, David, 39100 Dole (FR)
(86) Numéro de dépôt international: PCT/FR2019/052447
(87) Numéro de publication internationale: WO 2020/104736

(56) Documents cités:
- DE-A1- 3 324 329
- GB-A- 2 454 271
- US-A1- 2012 012 599

## Description

La présente invention porte sur un réservoir à carburant modulaire pour véhicule automobile. L'invention trouve une application particulièrement avantageuse avec les véhicules automobiles équipés de tout type de moteur thermique diesel ou essence.

De façon connue en soi, un réservoir à carburant comporte une enveloppe réalisée dans un matériau plastique, notamment par un procédé de soufflage, délimitant un espace de remplissage de carburant. Une tubulure de remplissage de carburant part du réservoir et se termine à proximité d'une ouverture prévue dans un panneau externe de la carrosserie. Un boîtier de trappe de remplissage disposé dans l'ouverture du panneau est conçu pour recevoir l'extrémité de la tubulure de remplissage. Un module jauge-pompe permet de fournir une indication sur la quantité du contenu du réservoir et d'alimenter les circuits du système d'injection du moteur thermique. Le réservoir est destiné à être fixé à la caisse du véhicule via des moyens de fixation adaptés constitués notamment par des sangles ayant des trous de passage pour des organes de fixation issus de la caisse du véhicule, tels que des goujons.

Le réservoir comporte en outre des passages pour le cheminement et le maintien de tuyaux et de faisceaux électriques, tel qu'un tuyau allant du module jauge-pompe vers le moteur thermique, un tuyau allant d'un dispositif d'absorption de vapeur vers le moteur thermique, des faisceaux vers le train arrière, un faisceau d'alimentation d'un bloc de chauffage additionnel, un faisceau d'alimentation d'un module de diagnostic de fuite du dispositif d'absorption de vapeur, etc...

Il existe toutefois une grande diversité de configurations de l'enveloppe du réservoir liée aux différentes normes de dépollution, telles que les normes €5, €6, €6.1, €6.2, etc.., aux différents types de motorisations diesel ou essence, ainsi qu'aux différents fournisseurs de réservoir.

La simplification du réservoir est difficile en raison du manque de centralisation des informations des équipes de conception des différents réservoirs, de la difficulté de cumuler l'ensemble des contraintes d'implantation, du décalage des plannings de lancement des différents véhicules, ainsi qu'au fait qu'historiquement la conception des parcours de faisceaux électriques et de tuyaux sur le réservoir était déléguée au fournisseur du réservoir.

Des réservoirs à carburant de véhicule automobile sont connus des documents GB 2 454 271 A, DE 33 24 329 A1 et US 2012/012599 A1.

L'invention vise à remédier efficacement à ces inconvénients en proposant un réservoir à carburant adaptable à plusieurs types de motorisations de véhicules automobiles comportant:
- une enveloppe délimitant un espace de remplissage de carburant,
- une tubulure de remplissage de carburant, et
- un module jauge-pompe,
l'enveloppe présentant une forme adaptée à couvrir différents types de motorisations essence et diesel, et ladite enveloppe comportant des passages permettant le cheminement et le maintien de tuyaux et/ou de faisceaux électriques, lesdits passages ménagés à l'avance dans ladite enveloppe étant aptes à couvrir des parcours de tuyaux et/ou de faisceaux électriques de différents types de motorisations essence et diesel, de sorte que certains passages utilisés pour les tuyaux et/ou les faisceaux électriques d'une motorisation donnée sont présents pour une motorisation d'un autre type mais non utilisés.

L'invention permet ainsi d'intégrer l'ensemble des inducteurs de diversité afin de disposer d'un réservoir compatible avec toutes les motorisations de véhicules automobiles. L'invention permet d'éviter le foisonnement de volume d'implantation imposant des diversités de parcours de tuyaux et de faisceaux électriques. L'invention permet également de garantir une interchangeabilité des réservoirs et des composants dans le monde entier. Il est en outre possible de disposer aisément de plusieurs sources d'approvisionnement afin d'éviter tout blocage dans la fabrication des véhicules automobiles dans le cas d'un problème de production dans une usine.

Selon une réalisation, ledit réservoir comporte en outre des zones de fixation pour fixer des modules fonctionnels rapportés, de façon à pouvoir sélectionner en cas de besoin des modules fonctionnels rapportés en fonction du type de motorisation du véhicule automobile.

Selon une réalisation, le ou les modules fonctionnels rapportés du réservoir sont choisis parmi les modules fonctionnels suivants: un réservoir d'additif de gasoil, un filtre à gasoil, un filtre à essence, un absorbeur de vapeur de carburant, des clapets.

Selon une réalisation, les zones de fixation dédiées aux modules fonctionnels d'une motorisation donnée sont compatibles avec des modules fonctionnels d'une autre motorisation.

Selon une réalisation, pour être compatible avec une motorisation essence, ledit réservoir comporte des passages pour le cheminement et le maintien de l'ensemble ou de certains tuyaux et faisceaux électriques suivants: des faisceaux de train arrière, un tuyau et un faisceau d'alimentation d'un bloc de chauffage additionnel, un tuyau allant du module jauge-pompe vers un moteur thermique, un tuyau allant d'un dispositif d'absorption de vapeur vers le moteur thermique, un tuyau de carburant alimentant un filtre à essence, un faisceau d'alimentation d'un module de diagnostic de fuite du dispositif d'absorption de vapeur.

Selon une réalisation, pour être compatible avec une motorisation diesel, ledit réservoir comporte des passages pour le cheminement et le maintien de l'ensemble ou de certains tuyaux et faisceaux électriques suivants: des faisceaux de train arrière, un tuyau et un faisceau d'alimentation d'un bloc de chauffage additionnel, un tuyau allant du module jauge-pompe vers un moteur thermique, un tuyau allant d'un dispositif d'absorption de vapeur vers le moteur thermique, un tuyau de carburant alimentant un filtre à gasoil, un tuyau de liquide de dépollution et un faisceau d'alimentation d'une pompe d'un système de réduction sélective catalytique, un faisceau de sonde d'échappement pour détecter des polluants de type oxydes d'azote, un faisceau pour une sonde de détection de suies.

Selon une réalisation, l'enveloppe est réalisée dans un matériau plastique soufflé.

L'invention a également pour objet un véhicule automobile caractérisé en ce qu'il comporte un réservoir à carburant tel que précédemment défini.
[Fig. 1] montre une vue en perspective d'un réservoir à carburant selon l'invention;
[Fig. 2a] montre une vue de dessus d'un réservoir à carburant selon l'invention destiné à être utilisé avec un premier type de motorisation essence;
[Fig. 2b] montre une vue de dessus d'un réservoir à carburant selon l'invention destiné à être utilisé avec un deuxième type de motorisation essence;
[Fig. 2c] montre une vue de dessus d'un réservoir à carburant selon l'invention destiné à être utilisé avec un troisième type de motorisation essence;
[Fig. 2d] montre une vue de dessus d'un réservoir à carburant selon l'invention destiné à être utilisé avec un quatrième type de motorisation essence;
[Fig. 3a] montre une vue de dessus d'un réservoir à carburant selon l'invention destiné à être utilisé avec un premier type de motorisation diesel;
[Fig. 3b] montre une vue de dessus d'un réservoir à carburant selon l'invention destiné à être utilisé avec un deuxième type de motorisation diesel;
[Fig. 3c] montre une vue de dessus d'un réservoir à carburant selon l'invention destiné à être utilisé avec un troisième type de motorisation diesel;
[Fig. 3d] montre une vue de dessus d'un réservoir à carburant selon l'invention destiné à être utilisé avec un quatrième type de motorisation diesel;
[Fig. 3e] montre une vue de dessus d'un réservoir à carburant selon l'invention destiné à être utilisé avec un cinquième type de motorisation diesel;
[Fig. 4] montre une vue de dessus d'un réservoir à carburant selon l'invention muni d'un clapet d'absorption des vapeurs au remplissage.

Les éléments identiques, similaires, ou analogues conservent la même référence d'une figure à l'autre.

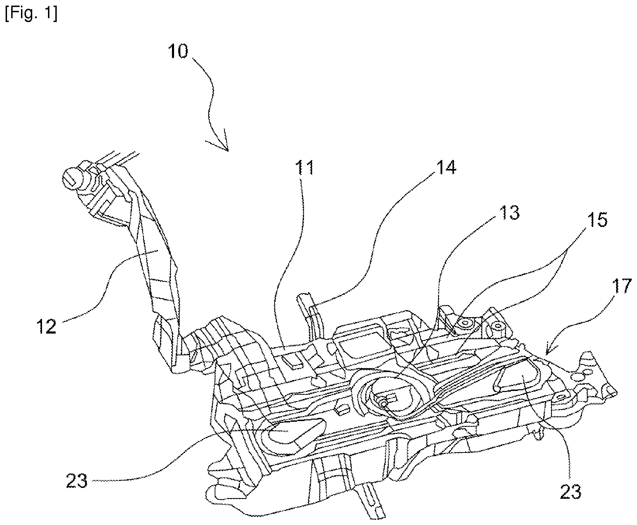

La figure 1 montre un réservoir à carburant 10, notamment pour véhicule automobile, comportant une enveloppe 11 réalisée de préférence dans un matériau plastique soufflé et délimitant un espace de remplissage de carburant.

Une tubulure de remplissage 12 de carburant part du réservoir 10 et se termine à proximité d'une ouverture prévue dans un panneau externe de la carrosserie (non représenté). Un boîtier de trappe de remplissage disposé dans l'ouverture du panneau est conçu pour recevoir l'extrémité de la tubulure de remplissage 12. Un module jauge-pompe 13 permet de fournir une indication sur la quantité du contenu du réservoir 10 et d'alimenter les circuits du système d'injection du moteur thermique. Le réservoir 10 est destiné à être fixé à la caisse du véhicule via des moyens de fixation adaptés constitués notamment par des sangles 14 ayant des trous de passage pour des organes de fixation issus de la caisse du véhicule, tels que des goujons.

Conformément à l'invention, l'enveloppe 11 présente une forme adaptée à couvrir différents types de motorisations de véhicules automobiles. Ainsi, la forme de l'enveloppe 11 pourra convenir à des motorisations essence et diesel sans interférer avec des composants en sous caisse des véhicules correspondants.

En outre, l'enveloppe 11 comporte des passages 15 permettant le cheminement et le maintien de tuyaux et/ou de faisceaux électriques. Ces passages 15 ménagés à l'avance dans l'enveloppe 11 sont aptes à couvrir des parcours de tuyaux et/ou de faisceaux électriques de différents types de motorisations essence et diesel, de sorte que certains passages 15 utilisés pour les tuyaux et/ou les faisceaux électriques d'une motorisation essence sont présents pour une motorisation diesel mais non utilisés, et inversement. Ces passages 15 pourront par exemple consister en des gorges réalisées dans le réservoir 10 et dont les bords sont munis de portions saillantes de maintien des faisceaux électriques ou des tuyaux, notamment par encliquetage.

Le réservoir 10 comporte également des zones de fixation 17 pour fixer des modules fonctionnels rapportés 20-23, de façon à pouvoir sélectionner des modules fonctionnels rapportés 20-23 en fonction du type de motorisation du véhicule automobile. Le ou les modules fonctionnels rapportés du réservoir 10 sont choisis parmi les modules fonctionnels suivants: un réservoir d'additif 20 de gasoil, un filtre à gasoil 21, un filtre à essence 22, un absorbeur de vapeur de carburant (non représenté), des clapets 23 notamment simple ou bi-matière. L'absorbeur de vapeur de carburant n'a pas été représenté car il est déporté par rapport au réservoir 10 mais il pourrait en variante être fixé sur le réservoir 10. Un clapet 23 pourra permettre une mise à l'air lors du remplissage du réservoir 10 ou lors d'un fonctionnement en mode électrique du véhicule afin d'évacuer des vapeurs de carburant. Alternativement, un clapet 23 pourra être utilisé pour assurer une récupération des vapeurs de carburant lors d'un remplissage.

Les zones de fixation 17 dédiées aux modules fonctionnels 20-23 d'une motorisation donnée sont compatibles avec des modules fonctionnels d'une autre motorisation. Par "compatibles", on entend le fait qu'une zone de fixation 17 pourra recevoir des modules fonctionnels 20-23 de différentes motorisations ou à tout le moins ne créera pas d'interférence entre des modules fonctionnels de différentes motorisations. Les modules fonctionnels 20-23 pourront être fixés dans les zones de fixation 17 dédiées via des interfaces de fixation adaptées, par exemple à l'aide d'organes de fixation tels que des vis ou par soudage, notamment pour la fixation des filtres à carburant.

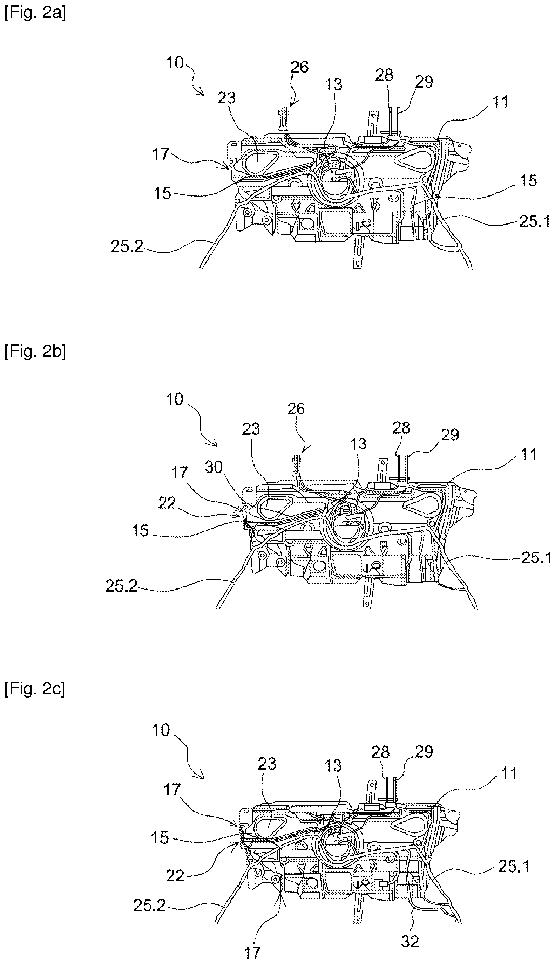

Les figures 2a-2d, 3a-3e, et 4 montrent, pour différents types de motorisations essence et diesel, des configurations de réservoirs 10 ayant une enveloppe 11 commune munie de passages 15 communs à toutes les motorisations essences et diesel, ainsi que des modules fonctionnels 20-23 pouvant varier d'une motorisation à l'autre. Autrement dit, tous les tuyaux et tous les faisceaux électriques des différents types de motorisations représentés sur les figures sont destinés à être reçus dans des passages 15 réalisés dans l'enveloppe 11 du réservoir ayant une forme commune à tous ces types de motorisations.

Dans le mode de réalisation de la figure 2a correspondant à un premier modèle de motorisation essence utilisé pour les véhicules européens, le réservoir 10 comporte des passages 15 pour le cheminement et le maintien des faisceaux électriques de train arrière 25.1, 25.2, d'un tuyau et d'un faisceau d'alimentation 26 d'un bloc de chauffage additionnel, ainsi que des passages 15 pour le cheminement et le maintien d'un tuyau 28 allant du module jauge-pompe 13 vers le moteur thermique, et d'un tuyau 29 allant d'un dispositif d'absorption de vapeur vers le moteur thermique. On précise que les faisceaux de train arrière 25.1, 25.2 contiennent chacun des fils d'alimentation et de commande pour les suspensions et les freins des roues, ainsi que le fil du capteur de vitesse des roues.

Dans le mode de réalisation de la figure 2b correspondant à un deuxième modèle de motorisation essence destiné à l'exportation, on distingue également un tuyau 30 de carburant alimentant un filtre à essence 22 qui pourra être disposé dans un passage 15 associé ménagé dans le réservoir 10.

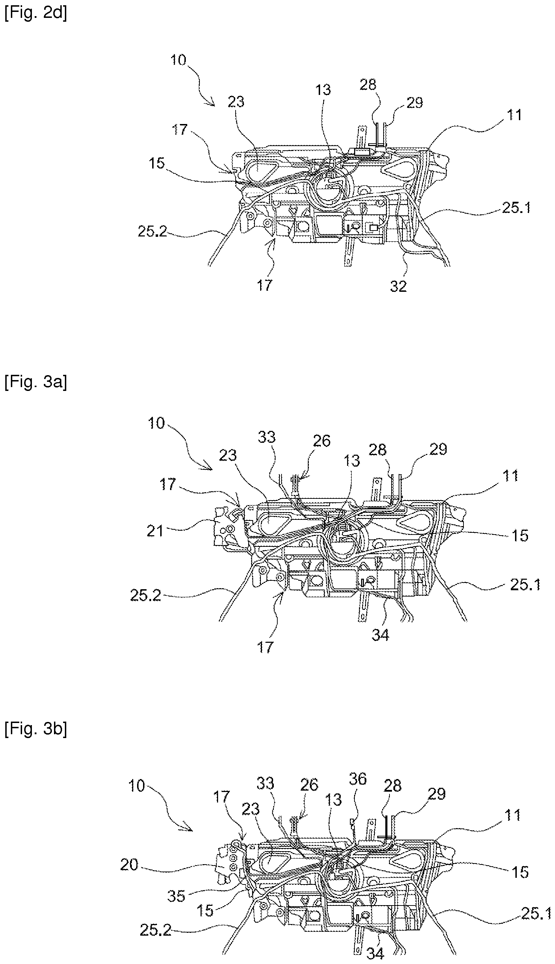

Dans les modes de réalisation des figures 2c et 2d correspondant à des motorisations destinées respectivement aux véhicules des marchés chinois et américain, on distingue en outre un faisceau 32 d'alimentation d'un module de diagnostic de fuite du dispositif d'absorption de vapeur. Dans le mode de réalisation de la figure 2d, le filtre à carburant pourra être un filtre interne.

Dans le mode de réalisation de la figure 3a correspondant à un premier modèle de motorisation diesel dit de type DV5R, le réservoir 10 comporte des passages 15 pour le cheminement et le maintien des faisceaux électriques de train arrière 25.1, 25.2, d'un tuyau et d'un faisceau d'alimentation 26 d'un bloc de chauffage additionnel, d'un tuyau 28 allant du module jauge-pompe 13 vers le moteur thermique, d'un tuyau 29 allant d'un dispositif d'absorption de vapeur vers le moteur thermique, d'un tuyau de carburant alimentant un filtre à gasoil 21, d'un tuyau 33 de liquide de dépollution et d'un faisceau 34 d'alimentation d'une pompe d'un système de réduction sélective catalytique (système "SCR" pour Selective Catalyst Reduction en anglais).

Dans le mode de réalisation de la figure 3b correspondant à un deuxième modèle de motorisation diesel dit de type DV6F, on distingue en outre un réservoir d'additif 20 de gasoil et un tuyau 35 correspondant.

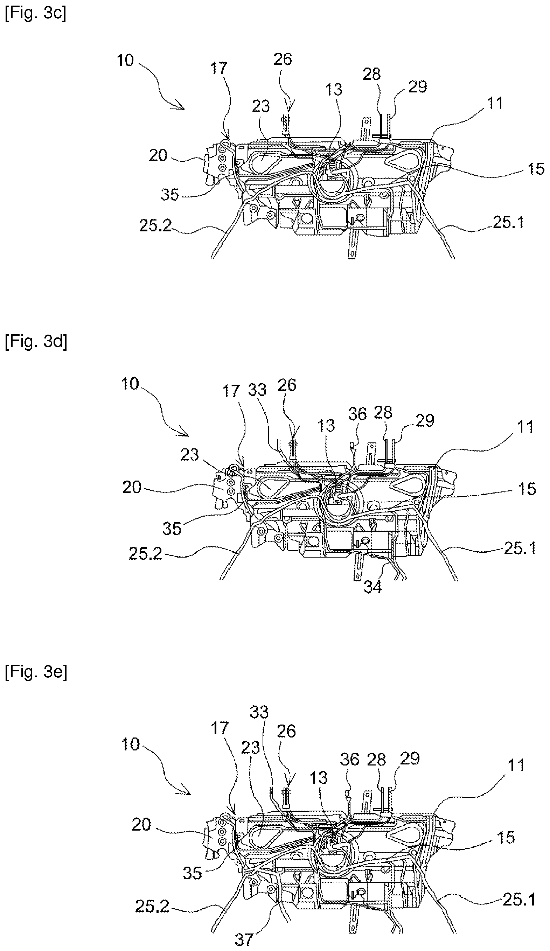

Dans le mode de réalisation de la figure 3c correspondant à un troisième modèle de motorisation diesel dit de type DV6C, les tuyaux et faisceaux du système SCR ont été supprimés.

Dans le mode de réalisation de la figure 3d correspondant à un quatrième modèle de motorisation diesel de type DW10euro 6.1 ou 6.2, on distingue en outre un faisceau 36 de sonde d'échappement pour détecter des polluants de type oxydes d'azote.

Dans le mode de réalisation de la figure 3e correspondant à un cinquième modèle de motorisation diesel de type DW10euro 6.3, on distingue en outre un faisceau 37 pour une sonde de détection de suies.

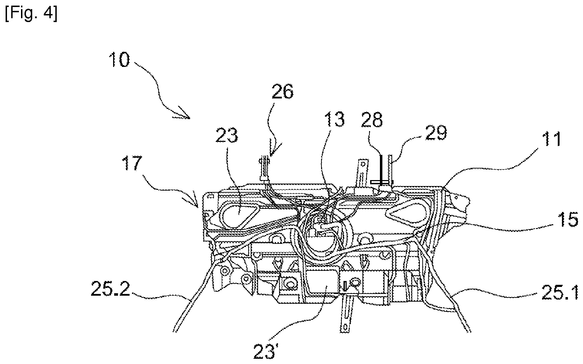

Dans le mode de réalisation de la figure 4 correspondant à un modèle de motorisation essence destiné au marché brésilien, le réservoir 10 comporte un clapet 23' d'absorption des vapeurs lors du remplissage du réservoir 10.

## Revendications

1. Réservoir à carburant (10) adaptable à plusieurs types de motorisations de véhicules automobiles comportant:
- une enveloppe (11) délimitant un espace de remplissage de carburant,
- une tubulure de remplissage (12) de carburant, et
- un module jauge-pompe (13), l'enveloppe (11) présentant une forme adaptée à couvrir différents types de motorisations essence et diesel, et ladite enveloppe (11) comportant des passages (15) permettant le cheminement et le maintien de tuyaux et/ou de faisceaux électriques, lesdits passages (15) ménagés à l'avance dans ladite enveloppe (11) étant aptes à couvrir des parcours de tuyaux et/ou de faisceaux électriques de différents types de motorisations essence et diesel, de sorte que certains passages (15) utilisés pour les tuyaux et/ou les faisceaux électriques d'une motorisation donnée sont présents pour une motorisation d'un autre type mais non utilisés.

2. Réservoir à carburant selon la revendication 1, **caractérisé en ce que** ledit réservoir (10) comporte en outre des zones de fixation (17) pour fixer des modules fonctionnels rapportés (20-23), de façon à pouvoir sélectionner en cas de besoin des modules fonctionnels rapportés (20-23) en fonction du type de motorisation du véhicule automobile.

3. Réservoir à carburant selon la revendication 2, **caractérisé en ce que** le ou les modules fonctionnels rapportés (20-23) du réservoir (10) sont choisis parmi les modules fonctionnels suivants: un réservoir d'additif (20) de gasoil, un filtre à gasoil (21), un filtre à essence (22), un absorbeur de vapeur de carburant, des clapets (23).

4. Réservoir à carburant selon l'une quelconque des revendications 1 à 3, **caractérisé en ce que** les zones de fixation (17) dédiées aux modules fonctionnels (20-23) d'une motorisation donnée sont compatibles avec des modules fonctionnels d'une autre motorisation.

5. Réservoir à carburant selon l'une quelconque des revendications 1 à 4, **caractérisé en ce que** pour être compatible avec une motorisation essence, ledit réservoir (10) comporte des passages (15) pour le cheminement et le maintien de l'ensemble ou de certains tuyaux et faisceaux électriques suivants: des faisceaux de train arrière (25.1, 25.2), un tuyau et un faisceau d'alimentation (26) d'un bloc de chauffage additionnel, un tuyau (28) allant du module jauge-pompe (13) vers un moteur thermique, un tuyau (29) allant d'un dispositif d'absorption de vapeur vers le moteur thermique, un tuyau (30) de carburant alimentant un filtre à essence (22), un faisceau (32) d'alimentation d'un module de diagnostic de fuite du dispositif d'absorption de vapeur.

6. Réservoir à carburant selon l'une quelconque des revendications 1 à 5, **caractérisé en ce que** pour être compatible avec une motorisation diesel, ledit réservoir (10) comporte des passages (15) pour le cheminement et le maintien de l'ensemble ou de certains tuyaux et faisceaux électriques suivants: des faisceaux de train arrière (25.1, 25.2), un tuyau et un faisceau d'alimentation (26) d'un bloc de chauffage additionnel, un tuyau (28) allant du module jauge-pompe (13) vers un moteur thermique, un tuyau (29) allant d'un dispositif d'absorption de vapeur vers le moteur thermique, un tuyau de carburant alimentant un filtre à gasoil (21), un tuyau (33) de liquide de dépollution et un faisceau (34) d'alimentation d'une pompe d'un système de réduction sélective catalytique, un faisceau (36) de sonde d'échappement pour détecter des polluants de type oxydes d'azote, un faisceau (37) pour une sonde de détection de suies.

7. Réservoir à carburant selon l'une quelconque des revendications 1 à 6, **caractérisé en ce que** l'enveloppe (11) est réalisée dans un matériau plastique soufflé.

8. Véhicule automobile **caractérisé en ce qu'**il comporte un réservoir à carburant (10) tel que défini selon l'une quelconque des revendications précédentes.

## Patentansprüche

1. Kraftstofftank (10), der an mehrere Typen von Kraftfahrzeugmotoren anpassbar ist, umfassend :
- eine Umhüllung (11), die einen Kraftstoffeinfüllraum begrenzt,
- ein Kraftstoffeinfüllrohr (12) und
- ein Messpumpenmodul (13),
das Gehäuse (11) eine Form hat, die geeignet ist, verschiedene Arten von Benzin- und Dieselmotoren abzudecken, und
wobei das Gehäuse (11) Durchgänge (15) umfasst, die das Verlegen und Halten von Rohren und/oder elektrischen Kabelbäumen ermöglichen, wobei die im Voraus in dem Gehäuse (11) gebildeten Durchgänge (15) Rohrverläufe und/oder elektrische Kabelbäume unterschiedlicher Art abdecken können Typen von Benzin und Dieselmotoren, so dass bestimmte Durchgänge (15), die für die Rohre und/oder die elektrischen Kabelbäume eines gegebenen Motors verwendet werden, für einen Motor eines anderen Typs vorhanden sind, aber nicht verwendet werden.

2. Kraftstofftank nach Anspruch 1, **dadurch gekennzeichnet, dass** der Tank (10) außerdem Befestigungszonen (17) zum Befestigen von hinzugefügten Funktionsmodulen (20-23) umfasst, um gegebenenfalls Module auswählen zu können (20-23) nach Motortyp des Kraftfahrzeugs.

3. Kraftstofftank nach Anspruch 2, **dadurch gekennzeichnet, dass** das/die hinzugefügten Funktionsmodule (20-23) des Tanks (10) aus folgenden Funktionsmodulen ausgewählt sind : ein Dieseladditivtank (20), ein Kraftstoff (21), ein Kraftstofffilter (22), ein Kraftstoffdampfabsorber, Ventile (23).

4. Kraftstofftank nach einem der Ansprüche 1 bis 3, **dadurch gekennzeichnet, dass** die den Funktionsmodulen (20-23) eines gegebenen Motors zugeordneten Befestigungszonen (17) mit den Funktionsmodulen eines anderen Motors kompatibel sind.

5. Kraftstofftank nach einem der Ansprüche 1 bis 4, **dadurch gekennzeichnet, dass** der Tank (10) zur Kompatibilität mit einem Benzinmotor Durchgänge (15) zum Führen und Halten aller oder einiger der folgenden Rohre und Kabelbäume umfasst: Kabelbäume der Hinterachse (25.1, 25.2), eine Leitung und ein Versorgungsstrang (26) von einem Zusatzheizgerät, eine Leitung (28) vom Messpumpenmodul (13) zu einer Wärmekraftmaschine, eine Leitung (29) von einer Dampfabsorption Vorrichtung zur Wärmekraftmaschine, eine Kraftstoffleitung (30) zur Versorgung eines Benzinfilters (22), einen Kabelbaum (32) zur Versorgung eines Leckdiagnosemoduls einer Dampfabsorptionsvorrichtung.

6. Kraftstofftank nach einem der Ansprüche 1 bis 5, **dadurch gekennzeichnet, dass** der Tank (10), um mit einem Dieselmotor kompatibel zu sein, Durchgänge (15) zum Führen und Halten aller oder einiger der folgenden Rohre und elektrischen Kabelbäume umfasst : Hinterachskabelbäume (25.1, 25.2), eine Leitung und ein Versorgungsstrang (26) von einem Zusatzheizgerät, eine Leitung (28) vom Messpumpenmodul (13) zu einer Wärmekraftmaschine, eine Leitung (29) von einer Dampfabsorptionseinrichtung zur Wärmekraftmaschine, eine Kraftstoffleitung, die einen Dieselfilter (21) versorgt, eine Leitung (33) für Reinigungsflüssigkeit und einen Kabelbaum (34) zur Versorgung einer Pumpe eines selektiven katalytischen Reduktionssystems, einen Abgassondenkabelbaum (36) zum Erfassen Schadstoffe vom Stickoxidtyp, ein Kabelbaum (37) für eine Rußerkennungssonde.

7. Kraftstofftank nach einem der Ansprüche 1 bis 6, **dadurch gekennzeichnet, daß** das Gehäuse (11) aus einem geblasenen Kunststoffmaterial besteht.

8. Kraftfahrzeug, **dadurch gekennzeichnet, dass** es einen Kraftstofftank (10) umfasst, wie er nach einem der vorhergehenden Ansprüche definiert ist.

## Claims

1. Fuel tank (10) adaptable to several types of motor vehicle engines comprising :
- an envelope (11) delimiting a fuel filling space,
- a fuel filler pipe (12), and
- a gauge-pump module (13),
the casing (11) having a shape adapted to cover different types of petrol and diesel engines, and
said casing (11) comprising passages (15) allowing pipes and/or electrical harnesses to be routed and held, said passages (15) formed in advance in said casing (11) being able to cover pipe runs and/or electrical harnesses of different types of petrol and diesel engines, so that certain passages (15) used for the pipes and/or the electrical harnesses of a given engine are present for an engine of another type but not used.

2. Fuel tank according to Claim 1, **characterized in that** the said tank (10) furthermore comprises fixing zones (17) for fixing added functional modules (20-23), so as to be able to select modules if necessary reported functions (20-23) depending on the type of engine of the motor vehicle.

3. Fuel tank according to claim 2, **characterized in that** the added functional modules (20-23) of the tank (10) are chosen from the following functional modules : a diesel additive tank (20), a fuel (21), a fuel filter (22), a fuel vapor absorber, valves (23).

4. Fuel tank according to any one of Claims 1 to 3, **characterized in that** the fixing zones (17) dedicated to the functional modules (20-23) of a given engine are compatible with the functional modules of another engine.

5. Fuel tank according to any one of Claims 1 to 4, **characterized in that** to be compatible with a petrol engine, the said tank (10) comprises passages (15) for routing and holding all or some following pipes and electrical harnesses: rear axle harnesses (25.1, 25.2), a pipe and a supply harness (26) from an additional heating unit, a pipe (28) from the gauge-pump module (13) to a heat engine, a pipe (29) going from a vapor absorption device to the heat engine, a fuel pipe (30) supplying a gasoline filter (22), a harness (32) for supplying a vapor absorption device leak diagnostic module.

6. Fuel tank according to any one of Claims 1 to 5, **characterized in that** to be compatible with a diesel engine, said tank (10) comprises passages (15) for routing and holding all or some following pipes and electrical harnesses : rear axle harnesses (25.1, 25.2), a pipe and a supply harness (26) from an additional heating unit, a pipe (28) from the gauge-pump module (13) to a heat engine, a pipe (29) going from a vapor absorption device to the heat engine, a fuel pipe supplying a diesel filter (21), a pipe (33) for depollution liquid and a harness (34) for supplying a pump of a selective catalytic reduction system, an exhaust probe harness (36) for detecting pollutants of the nitrogen oxide type, a harness (37) for a detection probe soot.

7. Fuel tank according to any one of Claims 1 to 6, **characterized in that** the casing (11) is made of a blown plastic material.

8. Motor vehicle **characterized in that** it comprises a fuel tank (10) as defined according to any one of the preceding claims.
